# EUROPÄISCHE PATENTSCHRIFT

(11) **EP 2 077 425 B1**
(45) Veröffentlichungstag und Bekanntmachung des Hinweises auf die Patenterteilung: **30.03.2011**
(21) Anmeldenummer: 09075149.6
(22) Anmeldetag: 28.11.2006
(51) Int. Cl.: F24J 3/06

(54) **Verfahren zur Erzeugung von Wärme aus einem natürlichen Gewässer**
Method of production of heat out of a natural body of water
Méthode de production de la chaleur d'eaux naturelles

(43) Veröffentlichungstag der Anmeldung: 08.07.2009
(62) Teilanmeldung aus: 06024566.9
(73) Patentinhaber: Loidl, Max, 84359 Simbach am Inn (DE)
(72) Erfinder: Loidl, Max, 84359 Simbach am Inn (DE)

(56) Entgegenhaltungen:
- EP-A- 0 286 628
- CH-A- 232 847
- DE-A1- 2 400 175
- DE-A1- 3 103 366
- DE-A1- 19 933 820
- FR-A- 2 420 103
- US-A- 4 464 909
- DATABASE WPI Week 198645 Thomson Scientific, London, GB; AN 1986-296822 XP002532827 & SE 453 676 B 22. Februar 1988 (1988-02-22) -& SE 453 676 B (LAGSTROEM GOERAN) 22. Februar 1988 (1988-02-22)

## Beschreibung

Wärmepumpen werden bereits zur Nutzung der Erdwärme, des Grundwassers etc. eingesetzt. Femwärme-Wärmepumpenheizkraftwerke und Fernwärme-Geothermieheizkraftwerke etc. sind bereits in Betrieb. Der Bau von Großwärmepumpen für eine kombinierte Femkälte- und Fernwärmeversorgung ist heute bereits in den MW-Leistungsbereich durch Parallel- und Serienschaltung möglich. Durch geeignete Kältemittel und durch Hintereinanderschaltung mehrerer Wärmepumpen kann auch ein zum Betrieb einer Dampfturbine zur Elektrizitätserzeugung erforderliches Temperaturniveau erreicht werden. Von allen Wärmepumpenarten haben Wasser-Wasser-Wärmepumpen den höchsten Wirkungsgrad, der durch das Direktverdampfungsverfahren noch erhöht werden kann. Durch Verwendung von Gasmotoren für Wärmepumpen und bei der Erzeugung von Strom für strombetriebene Wärmepumpen durch gasbetriebene Dampfturbinen lässt sich durch Kraft-Wärmekopplung und Verwendung der Prozesswärme die Energiebilanz von Wärmepumpen auch im Temperaturbereich ab 75 °C erheblich verbessern.

Wegen Gerölls und Treibguts und dem Druck des fließenden Wassers lassen sich Wärmetauscher von Wärmepumpen in fließenden Gewässern jedoch nur sehr erschwert frei verlegen. Wärmetauscher in Gewässern, und Wärmekraftwerke außerhalb von bereits vorhandenen Kraftwerksanlagen können sich störend auf die Umwelt auswirken. Die Errichtung von neuen Kraftwerken ist im allgemeinen mit hohen Auflagen verbunden.

Bei den Wärmepumpenanlagen mit Erdsonden, Grundwasserbrunnen, Erdkollektoren etc. muss stets eine sehr große Wasser- oder Solemenge an den Verdampfer zum Wärmeaustausch herangeführt werden. Dies geschieht durch Pumpen, wodurch sich die Energiebilanz solcher Wärmepumpenanlagen erheblich verschlechtert. Außerdem besteht dabei die Gefahr der Verockerung von Wärmetauschern und die Gefahr der Aufnahme von aggressiven Stoffen in das Wärmetauschersystem.

Dokument US 446 49 09 A beschreibt ein Verfahren, bei dem einem sich in Ufernähe unter Wasser befindlichen Wärmetauscher, mit vorzugsweise schraubenförmig gebogenen, mit vertikaler Achse angeordneten, Wärmetauscherrohren, Wasser durch ein im Verhältnis zum Wärmetauscher enges, ungefähr in der Mitte des Bodens des Wärmetauschers vertikal angebrachtes Rohr, in konstanter oder veränderlicher Flussmenge zugeführt wird.

Dokument SE 445 254 B beschreibt einen sich unter Wasser befindlichen rohrförmigen Kollektor einer Wärmepumpenanlage, der eine Vorrichtung zur Erzeugung einer Strömung durch den horizontal liegenden Wärmetauscher besitzt, wobei die Flussrichtung des Mediums im Kollektor und die Flussrichtung des Wassers durch den Wärmetauscher entgegengesetzt nach dem Gegenstromprinzip verläuft.

Dokument DE 199 33 820 beschreibt ein Verfahren zur Gewinnung von Wärme aus einem natürlichen Gewässer mit eigener Strömung.

Dokument EP 0 286 628 B1 bezieht sich auf ein Wasserkraftwerk, insbesondere ein Speicherwasserkraftwerk mit wenigstens einer Turbine, bei der eine unterwasserseitig angeschlossene, zu einer Wärmepumpe führende Leitung vorgesehen ist, mit der Wärmepumpe dem abgearbeiteten Unterwasser des Wasserkraftwerks Wärme entzogen und das Wasser dann in ein Gewässer geleitet wird.

Aufgabe der vorliegenden Erfindung ist es, ein Verfahren zur Erzeugung von Wärme mit einer Wärmepumpenanlage auf einem Wasserkraftwerk bzw. Wasserkraftwerksgelände anzugeben, bei dem das gesamte fließende Wasser des Flusses ohne Teilausleitung und ohne erforderliche Pumpen genutzt werden kann, dabei keine Beeinträchtigung des normalen Betriebs des Wasserkraftwerks erfolgt und bei dem vor allem für den erforderlichen Schutz der sich in fließenden Gewässern befindlichen Wärmetauscher und deren erforderliche Befestigung bzw. Anbringung gesorgt wird. Diese Aufgabe wird mit einem Verfahren gemäß dem Patentanspruch gelöst.

Lässt man einen sich in einem natürlichen Gewässer unter Wasser befindlichen Wärmetauscher, bestehend aus sehr gut wärmeleitendem Material, der durch die Kombination mit einem stabilen und verstärkenden Gitter geschützt wird, außenseitig durch eine große Menge von strömenden Wasser aus natürlichen Gewässern umfließen, so kann der Wärmeaustausch bereits hier an ein innenseitig strömendes in einem Wärmetauscherkreislauf befindliches Medium oder beim Direktverdampfungsverfahren an ein Kältemittel der Wärmepumpenanlage selbst erfolgen.

Sowohl beim Direktverdampfungsverfahren, als auch beim Zwischenschalten eines Primärkreislaufs lässt sich daher durch Wasser aus natürlichen Gewässern, welches außenseitig die Wärmetauscher umströmt, die Energiebilanz von Wärmepumpenanlagen erheblich verbessern, wenn dazu die Eigenströmung von Gewässern ( z. b. Flüsse, Kanäle) verwendet wird. Diese Strömungen in natürlichen Gewässern können jedoch bei einem Wärmetauscher, bestehend aus sehr gut wärmeleitendem Material, nur dann verwendet werden, wenn der Schutz des Wärmetauschers hinsichtlich Beschädigungen, die direkt oder indirekt durch die äußere Strömung entstehen können, sicher gestellt wird, was durch die Kombination mit stabilen und verstärkenden Gitterstäben erfolgt, die zur Strömungsseite hin, unmittelbar vor den Wärmetauscherrohren angeordnet sind.

Auch bei einem Wasserkraftwerk lässt sich im Bereich vor den Turbinenanlagen unter Wasser eine solche Kombination aus Wärmetauscher, bestehend aus sehr gut wärmeleitendem Material und stabilem verstärkenden Gitter befestigen. In Wasserkraftwerken werden zum Schutz der Turbinenanlagen vor dem Turbineneinlauf Schutzgitter, sogenannte Kraftwerksrechen angebracht.

Hinter jedem Stab (bzw. hinter jedem n-ten Stab je nach dem Rohrkrümmungsradius der Wärmetauscherrohre) des Schutzgitters (Kraftwerksrechen) soll geschützt auf der Kraftwerksseite, parallel zu den Gitterstäben, zusätzlich ein Wärmetauscherrohr, bestehend aus sehr gut leitendem Material, angebracht werden, wobei diese von unten nach oben parallel zueinander verlaufenden Wärmetauscherrohre (3) entweder fortlaufend (z. B. mäanderförmig) miteinander verbundenen sind oder unten und oben parallel zueinander mit gemeinsamem Vor- und Rücklauf geschaltet sind. Eine solche Anordnung des Wärmetauschers ermöglicht es, die wichtigen Anströmungsverhältnisse vor den Kraftwerksturbinen beizubehalten. Um den Wärmetauscher gegen Stöße zu schützen, kann er auch in Kombination mit einem weiteren Gitter im Bereich zwischen dem eigentlichen Kraftwerksrechen und dem Turbinenbereich des Wasserkraftwerks angebracht werden, z. B. Anbringung bei den Dammtafeln.

Eine einfache und sichere (auch nachträgliche) Befestigungsmöglichkeit und Wartungsmöglichkeit einer solchen Kombination aus Wärmetauscher und Gitter ist auch im Bereich innerhalb der Dammtafeln möglich, da dieser Bereich dazu wasserfrei gemacht werden kann. Bei besonders schwierigen Anströmungsverhältnissen zu den Turbinen können die Wärmetauscherelemente zusammen, geschützt durch einen weiteren zusätzlichen Kraftwerksrechen auch dem ursprünglichen Kraftwerksrechen (bei entsprechender Befestigung an den Zwischenpfeilern und Verwendung einer Rechenreinigungsanlage) vorgesetzt werden.

Weitere Vorteile sind, dass eine einfache Stromzuführung zur Wärmepumpenanlage durch das Wasserkraftwerk erfolgen kann, eine umweltverträgliche Errichtung eines Wärmepumpen-Heizkraftwerkes auch auf der Wasserkraftwerksanlage oder in der Umgebung der Wasserkraftwerksanlage möglich ist, Fernwärmeleitungen auch auf der Trassenführung der Stromleitungen möglich sind und nachhaltige umweltfreundliche Energieversorgung ohne Abhängigkeit von weiteren Energieträgern möglich ist und die Wartung der Wärmepumpenanlage durch Einbindung des bereits vorhandenen Personals des Wasserkraftwerks erfolgen kann.

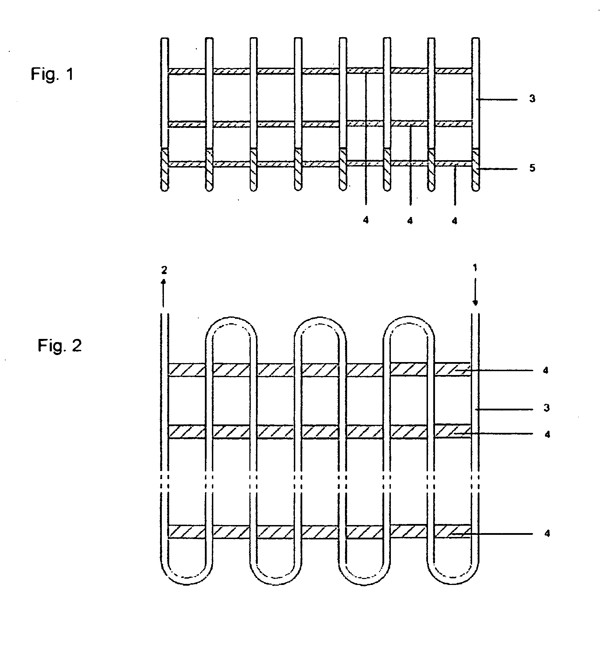

In Fig. 1 (Querschnitt) und Fig. 2 (Längsschnitt) wird ein Ausführungsbeispiel für ein Wärmetauscherelement mit einer mäanderförmigen Verbindung der Wärmetauscherrohre ( 3 ) mit Vorlauf ( 1 ), Rücklauf ( 2 ), Querverstrebung ( 4 ) und Kraftwerksrechen aus stabilen Gitterstäben ( 5 ) gezeigt.

## Patentansprüche

1. Verfahren zur Erzeugung von Wärme oder Kälte aus einem natürlichen Gewässer mit eigener Strömung, z. B. Flüsse, Kanäle, durch eine Wärmepumpenanlage mit einem Wärmetauscher, wobei an dem sich in dem natürlichen Gewässer unter Wasser befindlichen Wärmetauscher, bestehend aus sehr gut wärmeleitendem Material, der durch die Kombination mit einem stabilen und verstärkenden Gitter geschützt wird, außenseitig Wasser vorbeiströmt und innenseitig ein in einem Wärmetauscherkreislauf befindliches Medium strömt oder bei einem Direktverdampfungsverfahren ein Kältemittel der Wärmepumpenanlage selbst strömt, wobei die Rohre (3) entweder fortlaufend, z. B. mäanderförmig, miteinander verbunden oder gebogen sind oder an ihren Enden parallel zueinander mit gleichsinniger Durchflussrichtung geschaltet sind, **dadurch gekennzeichnet, dass** die Rohre (3) geschützt sind hinter stabilen Gitterstäben (5), die zur Strömungsseite hin, unmittelbar davor, parallel zu den Wärmetauscherrohren (3) angeordnet sind, wobei diese Kombination aus Gitterstäben (5) und Wärmetauscherrohren (3) ein ortsfest angebrachter Kraftwerksrechen eines Wasserkraftwerks ist, bei dem parallel zu diesen zur Verstärkung dienenden Gitterstäben (5), senkrecht zur Strömungsrichtung, geschützt unmittelbar dahinter, auf der Kraftwerkseite, die Wärmetauscherrohre (3) angebracht sind oder dass diese Kombination aus zur Verstärkung und zum Schutz dienenden stabilen Gitterstäben (5) und Wärmetauscherrohren (3) im Bereich zwischen dem Kraftwerksrechen und dem Turbinenbereich eines Wasserkraftwerks angebracht wird oder diese Kombination als weiterer Kraftwerksrechen, befestigt an den Zwischenpfeilem, dem eigentlichen Kraftwerksrechen eines Wasserkraftwerks vorgesetzt wird.

## Claims

1. Method for generating heat or cold from a natural body of water having its own current, for example rivers, channels, by means of a heat pump system having a heat exchanger, wherein the heat exchanger, which is located under water in the natural body of water, consists of material having a very good thermal conductibility, is protected by being combined with a firm and reinforcing grid, has water flowing along its exterior and a medium in a heat exchanger circuit flowing within its interior or a refrigerant of the heat pump system itself flowing in case of a direct expansion process, wherein the tubes ( 3 ) are either continuously, e.g. in a meandering course, connected to each other or bent or are connected to each other in parallel at their ends in the same direction of flow,
**characterized in that**
the tubes ( 3 ) are protected behind firm grid members ( 5 ), which are arranged such that they face the current, just in front of and parallel to the tubes ( 3 ) of the heat exchanger, wherein this combination of grid members ( 5 ) and tubes ( 3 ) of the heat exchanger is a stationarily fastened trash screen of a hydroelectric power plant, where the tubes ( 3 ) of the heat exchanger are mounted parallel to these reinforcing grid members ( 5 ), vertically with regard to the direction of flow, protected immediately behind them, on the power plant side or that this combination of firm grid members ( 5 ) for reinforcement and protection and tubes ( 3 ) of the heat exchanger is mounted in the area between the trash screen and the turbine area of a hydroelectric power plant or this combination, fixed to the intermediate pillars, is placed in front of the actual trash screen of a hydroelectric power plant as a further trash screen.

## Revendications

1. Procédé pour la production de chaleur ou de froid à partir d'un cours d'eau naturel présentant un propre écoulement, tel que p. ex. un fleuve, un canal, à l'aide d'une installation de pompe à chaleur comprenant un échangeur de chaleur, dans le cadre de laquelle ledit échangeur de chaleur, qui est doté d'une très bonne thermoconductivité et protégé par une grille constituée de barreaux stables et renforcés, se trouve immergé dans un cours d'eau naturel et l'eau qui s'écoule passe le long des flancs extérieurs dudit échangeur de chaleur pendant que, à l'intérieur, circule un fluide contenu dans un circuit d'échange de chaleur, ou, dans le cas d'un procédé de vaporisation directe, circule de lui-même un agent réfrigérant de l'installation de la pompe à chaleur, les tubes ( 3 ) étant reliés les uns aux autres de manière continue, p. ex. sous forme de serpentin, ou courbés ou montés à leurs extrémités parallèlement les uns par rapport aux autres avec un sens d'écoulement de fluide identique,
**caractérisé en ce que**,
les tubes (3) sont protégés par des barreaux (5) stables qui, agencés du côté de l'écoulement, sont disposés directement devant les tubes d'échange de chaleur (3) et parallèlement à ces derniers, cette combinaison de barreaux (5) et de tubes d'échange de chaleur (3) constituant une grille stationnaire d'une centrale hydroélectrique, dans le cadre de laquelle lesdits tubes d'échange de chaleur (3) sont placés du côté de l'usine hydroélectrique perpendiculairement au sens d'écoulement et parallèlement aux barreaux (5) servant de renforcement et directement derrière eux pour les protéger, ou **en ce que** ladite combinaison de barreaux (5) stables servant de renforcement et de protection et de tubes d'échange de chaleur (3) est placée dans la zone comprise entre la grille de la centrale et la zone des turbines d'une centrale hydroélectrique ou est placée en tant que grille de protection supplémentaire en amont de la grille de protection d'origine de la centrale et fixée aux pieds-droits intermédiaires de pont.
